# EUROPÄISCHE PATENTANMELDUNG

(11) **EP 1 972 301 A1**
(43) Veröffentlichungstag der Anmeldung: **24.09.2008**
(21) Anmeldenummer: 08000417.9
(22) Anmeldetag: 10.01.2008
(51) Int. Cl.: A61C 13/15

(54) **Lichthärtgerät-Basisstations-Kombination**

(30) Priorität: 22.03.2007 DE 102007013783
(71) Anmelder: Ivoclar Vivadent, 9494 Schaan (LI)
(72) Erfinder: Senn, Bruno, 9470 Buchs (CH); Plank, Wolfgang, 6830 Rankweil (AT)
(74) Vertreter: Baronetzky, Klaus

(57) **Zusammenfassung**

Die Erfindung betrifft eine Lichthärtgerät-Basisstations-Kombination, mit einem Wärmeaufnahmekörper, der insbesondere metallisch ist, und der in wärmeleitverbindung mit einer Wärmequelle, insbesondere einer Lichtquelle, steht, und insbesondere mit einem Handgriff. Die Basisstation (12) weist für das Lichthärtgerät (10) eine Wärmeableitvorrichtung (27) auf, die bei in oder an der Basisstation (12) aufgenommenem Lichthärtgerät (14) in Anlage mit dem Wärmeaufnahmekörper (24) ist.

## Beschreibung

Die Erfindung betrifft ein Lichthärtgerät-Basisstations-Kombination, gemäß dem Oberbegriff von Anspruch 1.

Ein derartiges Lichthärtgerät ist beispielsweise aus der DE-A1-41 24 412 bekannt. Bei dieser Lösung weist ein als Handstück ausgebildetes Lichthärtgerät einen Wärmetauscher auf, der an dem rückwärtigen Ende des Lichthärtgeräts ausgebildet ist. Durch ein entsprechendes Wärmetauschelement und Versorgungsleitung soll ein wärmetausch sichergestellt werden.

Ferner ist es an sich bekannt, einen relativ massiven Körper in einem Lichthärtgerät als Wärmekapazität zu verwenden und dementsprechend als Wärmesenke für als Lichtquellen eingesetzte LEDs einzusetzen.

Das Vorsehen kompakter Wärmekapazitäten in dem Lichthärtgerät hat den Vorteil, dass dort kein Gebläse erforderlich ist, das zum einen störanfällig ist, aber auch verhindert, dass das Lichthärtgerät sterilisierbar ist, denn durch die für das Gebläse erforderlichen Gehäuseöffnungen kann stets Sterilisierflüssigkeit eindringen.

Derartige Lösungen waren jedoch bislang kommerziell wenig erfolgreich, denn sie bedingen eine erhebliche Zykluszeit, aufgrund der für die Abkühlung der Wärmekapazität erforderlichen Abkühlphase. Gerade bei Lichtquellen mit hoher Leistung, also unter Verwendung von LEDs mit einem Lichtstrom von mehr als 100 Lumen, sind daher derartige Lösungen nicht praktikabel.

Daher liegt der Erfindung die Aufgabe zu Grunde, eine Lichthärtgerät-Basisstations-Kombination dem Oberbegriff von Anspruch 1 zu schaffen, das zum einen für die Verwendung mindestens einer LED mit einer hohen Lichtleistung bzg. einem hohen Lichtstrom geeignet ist, aber dennoch eine vertretbare Zykluszeit ermöglicht, und dennoch sterilisierbar ist.

Diese Aufgabe wird erfindungsgemäß durch Anspruch 1 gelöst. Vorteilhafte Weiterbildungen ergeben sich aus den Unteransprüchen.

Erfindungsgemäß ist es besonders günstig, dass das Gehäuse des Lichthärtgeräts außen glatt, stabförmig und insofern kompakt sein kann.

Erfindungsgemäß ist der rückwärtige Bereich als Wärmetauschbereich ausgebildet, und gerade dort ist die erhöhte Wärmekapazität zur gebläsefreien Kühlung der Lichtquelle vorgesehen.

Durch Einstecken in eine Basisstation lässt sich aufgrund der vergleichsweise großen Wärmeübertragungsfläche mit geringem Wärmewiderstand eine rasche Kühlung des Wärmespeichers erzielen, was erstmalig eine entsprechend kurze Zykluszeit bei derartigen sterilisierbaren Lichthärtgeräten ermöglicht.

Erfindungsgemäß besonders günstig ist es, dass durch den intensiven Kontakt zwischen dem Wärmeaufnahmekörper der Basisstation und der Kühlvorrichtung eine rasche Wärmeableitung erfolgen kann. Die Kühlvorrichtung der Basisstation kann hierzu eine eigene Wärmekapazität aufweisen, die beispielsweise durchaus um den Faktor 10 höher als die Wärmekapazität des Wärmeaufnahmekörpers im Lichthärtgerät sein kann. Hierdurch ist eine schnelle Wärmeableitung gewährleistet, wobei die Wärmekapazität der Kühlvorrichtung wiederum in beliebiger geeigneter Weise gekühlt werden kann, beispielsweise durch ein Gebläse, so dass sie bei nächstem Zyklus ohne Weiteres wieder auf Raumtemperatur ist und so intensiv kühlend wirkt.

Hierdurch ergibt sich die Möglichkeit, mit einer vergleichsweise kleinen und dementsprechend leichten Wärmekapazität des Wärmeaufnahmekörpers des Lichthärtgeräts dennoch eine rasche Zykluszeit bei einer ergonomisch günstigen Ausgestaltung des Lichthärtgeräts zu realisieren. Bevorzugt ist in diesem Zusammenhang der eigentliche Wärmeaufnahmekörper metallisch, beispielsweise aus Kupfer, einschließlich seiner Oberfläche. Zum Schutz der Hand des Benutzers kann hierbei eine automatisch den Wärmeaufnahmekörper abdeckende Schiebehülse vorgesehen sein, die beispielsweise aus Kunststoff besteht und federbelastet den Wärmeaufnahmekörper abdeckt, wenn sich das Lichthärtgerät nicht in der Basisstation befindet.

Für das Einsetzen des Lichthärtgeräts in die Basisstation lässt sich kurzerhand das Lichthärtgerät mit seinem rückwärtigen Ende in eine entsprechende Ausnehmung der Basisstation einführen. Hierdurch wird die Schiebehülse, die gemäß einer vorteilhaften Ausgestaltung vorgesehen sein kann, zurückgeschoben.

Die Ausnehmung in der Basisstation ist bevorzugt so bemessen, dass das Lichthärtgerät über den gesamten Bereich seines Wärmeaufnahmekörpers in der Ausnehmung eintaucht und eine großflächige Wärmeübertragungsfläche zur Verfügung steht.

Erfindungsgemäß besonders günstig ist es, dass das Lichthärtgerät ausgesprochen schlank und stabförmig sein kann. Hierdurch wird die Handhabung wesentlich vereinfacht, und es ist auch viel besser möglich, an distalen Seiten von Molaren die Härtung vorzunehmen, insbesondere, wenn die Spitze des Lichthärtgeräts mit dem Lichtaustrittsende abgekröpft ist, so dass eine seitliche Lichtabgabe wesentlich erleichtert wird.

Erfindungsgemäß ist es besonders günstig, dass die Lichtquelle entweder dem Wärmeaufnahmekörper benachbart, also insofern gleichsam automatisch in intensiver Wärmeleitverbindung mit diesem, oder am vorderen Ende des Lichthärtgeräts ausgebildet sein kann. Im ersten Fall ist ein Lichtleiter vorgesehen, der sich durch deutlich mehr als die Hälfte des Gehäuses des Lichthärtgeräts hindurch erstreckt und auch die Lichtabgabe zur seitlichen Lichtaustrittsfläche umlenkt. Im zweiten Fall kann die Lichtquelle entweder kurz vor der Umlenkung der Lichtabgabe angeordnet sein, oder sogar knapp hinter der Lichtaustrittsfläche. In beiden Fällen erstreckt sich dann zwischen Lichtquelle und Wärmeaufnahmekörper ein Wärmeleiter, wobei das den Wärmeleiter umgebende Gehäuse bevorzugt aus einem wärmedämmenden Material, wie Kunststoff, ausgebildet ist.

In vorteilhafter Ausgestaltung ist es vorgesehen, dass die Rückseite des Lichthärtgeräts, also die rückwärtige Stirnfläche, entweder unmittelbar durch den Wärmeaufnahmekörper gebildet ist, oder über eine metallische Abschlussfläche, die in Wärmeleitverbindung mit dem Wärmeaufnahmekörper steht. Diese Fläche lässt sich besonders gut für die Wärmeübertragung von dem Wärmeaufnahmekörper auf die Kühlvorrichtung der Basisstation ausnutzen.

Es ist auch möglich, an dieser Stelle in der Basisstation, also am Boden der sacklochförmigen Ausnehmung der Basisstation für die Aufnahme des Lichthärtgeräts, ein Kühlelement wie ein Peltierelement vorzusehen, wobei dessen Temperatur durch Strombeaufschlagung auf eine Temperatur deutlich unterhalb der Raumtemperatur absenkt wird, wenn die Kühlung des Lichthärtgeräts erfolgen soll. Hierdurch lässt sich deren Wärmeübergang weiter beschleunigen, so dass der Wärmeaufnahmekörper nach Einstecken in die Basisstation bereits nach recht kurzer Zeit, beispielsweise 10 Sekunden, Raumtemperatur erreicht hat.

Hierbei ist es auch möglich, den Wärmeaufnahmekörper gleichsam vor Einschalten der Lichtquelle vorzukühlen, um dann eine größere Wärmeaufnahmekapazität zur Verfügung zu stellen.

Die Ausführungsform mit der dem Lichtaustrittsende benachbarten Lichtquelle weist einen recht massiven Wärmeleiter auf. Dessen Wärmekapazität lässt sich zusätzlich zur Wärmekapazität des Wärmeaufnahmekörpers zur Wärme- bzw. Kältespeicherung verwenden.

Jedoch wird hierdurch das Lichthärtgerät etwas schwerer, so dass bei Zielsetzung leichter Lichthärtgeräte die Realisierung mit der Lichtquelle unmittelbar in Nachbarschaft zu dem Wärmeaufnahmekörper bevorzugt ist.

Gemäß einer weiteren besonders bevorzugten Ausgestaltung ist es vorgesehen, das Gehäuse des Lichthärtgeräts die Lichtquelle umgebend und vor der Lichtquelle reflektierend auszugestalten. Bevorzugt ist hierzu eine Beschichtung vorgesehen, die innen auf dem Kunststoffgehäuse des Lichthärtgeräts aufgebracht ist. Besonders bevorzugt in diesem Zusammenhang ist es, wenn eine einzige Leuchtdiode in Form eines entsprechenden LED-Chips aufgebracht ist und der Durchmesser des Lichthärtgeräts ausgesprochen dünn gewählt ist, so dass eine bleistiftartige Handhabung möglich ist. Der Durchmesser des Lichthärtgeräts kann beispielsweise 8 Millimeter, oder auch 12 Millimeter betragen, so dass die Lichtquelle zentral in dem Lichthärtgerät aufgenommen sein kann. Bei einer Wandstärke des Gehäuses des Lichthärtgeräts von 1 Millimeter kann dann immer noch ein Luftspalt von beispielsweise 1 Millimeter belassen werden, der der Wärmedämmung dient, so dass die Lichtquelle nicht unmittelbar in Kontakt mit dem aus Kunststoff bestehenden Gehäuse des Lichthärtgeräts gerät.

Es ist auch möglich, durch Einstecken des Lichthärtgeräts in die Basisstation automatisch eine Kühlung zu aktivieren. Hierzu kann beispielsweise ein Gebläse eingeschaltet werden, das bevorzugt einen seitlichen Luftstrom durch die Basisstation bereitstellt und an Kühlrippen entlang streicht, die den Wärmespeicher der Basisstation kühlen. Zusätzlich oder alternativ lässt sich hierdurch auch ein Kühlelement, wie beispielsweise ein Peltierelement einschalten.

In einer weiteren vorteilhaften Ausgestaltung ist es vorgesehen, dass der mit einem Wärmewiderstand von weniger als 10 W/°K, insbesondere weniger als 2 W/°K, in der Basisstation aufnehmbar ist.

In einer weiteren vorteilhaften Ausgestaltung ist es vorgesehen, dass das Gehäuse des Handstücks selbst oder ein Wärmespeicher des Handstücks eine Wärmetauschfläche bildet, die an der Basisstation anliegt.

In einer weiteren vorteilhaften Ausgestaltung ist es vorgesehen, dass der Wärmeaufnahmekörper eine Wärmekapazität aufweist, die der Wärmekapazität eines Kupferkörpers von etwa 0,5 bis 30 cm³, insbesondere 2 cm³ entspricht, und insbesondere im rückwärtigen Bereich des Lichthärtgeräts angeordnet ist. In einer alternativen Ausgestaltung ist es vorgesehen, die Anordnung der Wärmekapazität des Wärmeaufnahmekörpers auf den mittleren Bereich des Lichthärtgeräts zu konzentrieren, so dass der rückwärtige Bereich hiervon etwas thermisch getrennt von einem Handgriff gebildet sein kann.

In einer weiteren vorteilhaften Ausgestaltung ist es vorgesehen, dass sich vor der Lichtquelle ein Lichtleiter erstreckt, der insbesondere um einen Winkel zwischen 10° und 130°, bevorzugt etwa in einem rechten Winkel, endseitig abgebogen ist.

In einer weiteren vorteilhaften Ausgestaltung ist es vorgesehen, dass der an dem vorderen Ende des Lichtleiters eine Abkröpfung vorgesehen ist, die die seitliche Erstreckung sich um weniger als der Durchmesser des Lichthärtgeräts beträgt.

In einer weiteren vorteilhaften Ausgestaltung ist es vorgesehen, dass das Lichthärtgerät im Wesentlichen stabförmig ist und ein Längen/Durchmesser-Verhältnis von mehr als 5 zu 1, insbesondere etwa 12 zu 1 aufweist.

In einer weiteren vorteilhaften Ausgestaltung ist es vorgesehen, dass insbesondere stabförmig ausgeildete Lichthärtgerät in einer Ausnehmung der Basisstation aufnehmbar ist.

In einer weiteren vorteilhaften Ausgestaltung ist es vorgesehen, dass der Wärmeaufnahmekörper zwischen dem lichtaustrittsseitigen, vorderen Endbereich und dem Handgriff und/oder im Bereich des Handgriffs angeordnet ist.

In einer weiteren vorteilhaften Ausgestaltung ist es vorgesehen, dass der Wärmeaufnahmekörper direkt über das Gehäause oder ein Wärmetauschelement an der Basisstation anliegt.

In einer weiteren vorteilhaften Ausgestaltung ist es vorgesehen, dass wenigstens ein Teil der Wärmeableitvorrichtung von einen Wärmespeicher gebildet ist.

In einer weiteren vorteilhaften Ausgestaltung ist es vorgesehen, dass der Wärmespeicher mit dem Wärmeaufnahmekörper der Wärmeleitverbindung bringbar ist.

In einer weiteren vorteilhaften Ausgestaltung ist es vorgesehen, dass der Wärmeaufnahmekörper und ein mit dem Wärmespeicher in Verbindung stehender Aufnahmebereich der Basisstation formschlüssig zusammenwirkende Querschnitte aufweisen.

In einer weiteren vorteilhaften Ausgestaltung ist es vorgesehen, dass das in der Basisstation Aufnahme findende Lichthärtgerät wenigstens teilweise direkt mit der Basisstation in Kontakt steht.

In einer weiteren vorteilhaften Ausgestaltung ist es vorgesehen, dass der rückwärtige Endbereich des Lichthärtgeräts und/oder die Öffnung des Aufnahmebereichs das obere Ende der Ausnehmung der Basisstation eine Einführschräge aufweist.

In einer weiteren vorteilhaften Ausgestaltung ist es vorgesehen, dass die Wärmekapazität des Wärmespeichers mindestens doppelt so groß, insbesondere etwa 5 mal so groß, wie die Wärmekapazität des Wärmeaufnahmekörpers ist.

In einer weiteren vorteilhaften Ausgestaltung ist es vorgesehen, dass die Basisstation ein Gebläse und/oder Kühlrippen aufweist, und dass ein Kühlluftstrom durch die Basisstation quer zur Erstreckung des Lichthärtgeräts, das in der Basisstation aufgenommen ist, verläuft.

In einer weiteren vorteilhaften Ausgestaltung ist es vorgesehen, dass die Basisstation ein Kühlelement, beispielsweise ein Peltier-Element aufweist, das bei in die Basisstation eingestecktem Zustand in Wärmeleitverbindung mit dem Lichthärtgerät steht.

In einer weiteren vorteilhaften Ausgestaltung ist es vorgesehen, dass das Lichthärtgerät eine Schiebehülse trägt, die insbesondere federbelastet den Wärmeaufnahmekörper am rückwärtigen Endbereich des Lichthärtgeräts abdeckt, wenn das Lichthärtgerät nicht in die Basisstation eingesteckt ist.

In einer weiteren vorteilhaften Ausgestaltung ist es vorgesehen, dass das Lichthärtgerät in der Basisstation mit Magnetkraft gehalten wird.

In einer weiteren vorteilhaften Ausgestaltung ist es vorgesehen, dass sich in dem Aufnahmebereich der Basisstation ein hoch wärmeleitendes Gel befindet.

In einer weiteren vorteilhaften Ausgestaltung ist es vorgesehen, dass wenigstens ein Teil der Wärmeabblendvorrichtung in der Basisstation von einer Heat Pipe gebildet ist

Weitere Vorteile, Einzelheiten und Merkmale von zwei Ausführungsformen ergeben sich aus der nachfolgenden Beschreibung der Erfindung anhand der Zeichnung.

Es zeigen:
- Fig. 1: eine schematische Darstellung einer Ausführungsform eines erfindungsgemäßen Lichthärtgeräts;
- Fig. 2: eine Darstellung einer weiteren Ausführungsform des erfindungsgemäßen Lichthärtgeräts gemäß Fig. 1;
- Fig. 3: eine Schnittdarstellung einer Ausführungsform des Handstücks für ein erfindungsgemäßes Lichthärtgerät;
- Fig. 4: eine Schnittdarstellung einer weiteren Ausführungsform des Lichthärtgeräts eines erfindungsgemäßen Lichthärtgeräts;
- Fig. 5: eine Schnittdarstellung eines Lichthärtgeräts, das in eine Basisstation eingesetzt ist, in einer Ausführungsform des erfindungsgemäßen Lichthärtgeräts;
- Fig. 6: eine Schnittdarstellung der Basisstation gemäß Fig. 5;
- Fig. 7: eine Schnittdarstellung der Ausführungsform der Basisstation gemäß Fig. 6, jedoch aus einer anderen Richtung;
- Fig. 8: eine weitere Ausführungsform eines erfindungsgemäßen Lichthärtgeräts;
- Fig. 9: eine weitere Ausführungsform eines erfindungsgemäßen Lichthärtgeräts zusammen mit einer Basisstation; und
- Fig. 10: eine Detailansicht einer weiteren Ausführungsform einer erfindungsgemäßen Lichthärtgerät/Basisstations-Kombination.

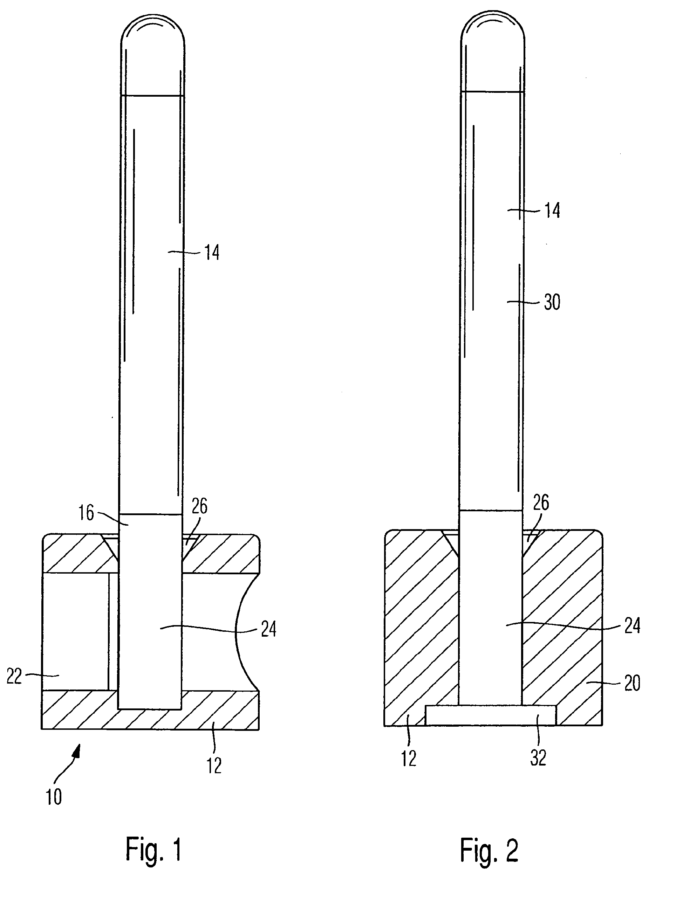

Die in Fig. 1 schematisch dargestellte Kombination 10 aus einem Lichthärtgerät 14 und einer Basisstation 12 zeichnet sich in dieser Ausführungsform dadurch aus, dass das Lichthärtgerät 14 im Wesentlichen stabförmig ist. In dieser Ausführungsform ist das stabförmige Lichthärtgerät 12 in eine Aufnahme 16 eingesteckt, die in der Basisstation 12 vorgesehen ist und einen Aufnahmebereich für das Lichthärtgerät bildet.

Anstelledessen kann das Lichthärtgerät auch eine beliebige andere Form aufweisen, beispielsweise auch eine Pistolenform, wobei ein rückwärtiger oder mittlerer Bereich dann mindestens in Kontakt mit der Basisstation gebracht wird.

In dem in Fig. 1 dargestellten Ausführungsbeispiel ist die Basisstation 12 als recht kompakter Körper, im Wesentlichen in Form eines Würfels oder eines nahezu würfelförmigen Zylinders ausgebildet. Die Basisstation 12 besteht zu wesentlichen Teilen aus Metall, wie beispielsweise Kupfer, so dass sie einen Wärmespeicher 20 bildet. Zusätzlich weist sie einen querverlaufenden Strömungskanal 22 auf, der ein kleines Gebläse aufnimmt, und der eine Luftströmung, die kühlend wirkt, durch die Basisstation hindurch leitet. Hierdurch wird zugleich das Lichthärtgerät 14 in seinem rückwärtigen Bereich, der einen Wärmeaufnahmekörper 24 aufweist, gekühlt.

Der Wärmespeicher 20 und ggf. der zusätzlich vorgesehene Strömungskanal 22 mit der so vorgesehenen Kühlwirkung bildet insofern einen Wärmeableitvorrichtung 27.

In dem dargestellten Ausführungsbeispiel ist die Basisstation 12 recht kompakt und weist beispielsweise den etwa dreifachen Durchmesser des Lichthärtgerät 14 auf. In einer alternativen Ausgestaltung ist sie jedoch wesentlich größer und weist einen Wärmespeicher 20 auf, dessen Wärmekapazität um eine Zehnerpotenz größer als die Wärmekapazität des Wärmeaufnahmekörpers 24 ist.

An der Ausnehmung 16 ist im oberen Bereich eine Einführschräge 26 vorgesehen, die die Einführung des Lichthärtgeräts 14 erleichtert.

Die relativen Abmessungen der Ausnehmung 16 einerseits und des Lichthärtgeräts 14 andererseits sind so gewählt, dass eine spielfreie Passung gewährleistet ist. Hierdurch liegt der Wärmeaufnahmekörper 24 satt und großflächig in der Ausnehmung 16 an, so dass ein guter Wärmeübergang gewährleistet ist.

Das Lichthärtgerät 14 ist im Wesentlichen stiftförmig und weist in seinem rückwärtigen Bereich den Wärmeaufnahmekörper 24 mit einer metallischen Außenfläche auf. Die metallische Außenfläche ist als Wärmetauschelement 25 mit dem eigentlichen Aufnahmekörper angeordnet. Demgegenüber ist das Gehäuse des Lichthärtgeräts 14 im übrigen aus Kunststoff, so dass insofern eine Wärmedämmung gegeben ist.

In dem dargestellten Ausführungsbeispiel ist die Länge des Lichthärtgeräts 14 so gewählt, dass der Zahnarzt ohne Weiteres das Lichthärtgerät 14 im Bereich des Kunststoffgehäuses 30 anfassen kann und die erwünschte Handhabung vornehmen kann. Alternativ ist es auch möglich, eine - bei Bedarf auch abnehmbare - Schiebehülse vorzusehen, die sich bei aus der Ausnehmung 16 herausgenommenen Lichthärtgerät 14 automatisch nach hinten in den Bereich des Wärmeaufnahmekörpers 24 bewegt und diesen gleichsam vor Berührung schützt.

Aus Fig. 2 ist eine modifizierte Ausgestaltung des erfindungsgemäßen Lichthärtgeräts ersichtlich. Dort ist anstelle der Zwangsbelüftung mit einem Gebläse, wie sie in Fig. 1 schematisch angedeutet ist, ein Peltierelement 32 vorgesehen, das kühlend wirkt und ebenfalls in intensivem Wärmekontakt mit dem Wärmeaufnahmekörper 24 steht, wenn das Lichthärtgerät 14 in die Ausnehmung 16 eingesetzt ist. Bei dieser Lösung kühlt das Peltierelement 32 unmittelbar den Wärmeaufnahmekörper 24 von seiner Stirnseite. Zusätzlich wird der Wärmespeicher 20 gekühlt und indirekt über dem Wärmespeicher 20 wird auch der Wärmeaufnahmekörper 24 von der Seite gekühlt.

Es versteht sich, dass bei Bedarf die beiden Ausführungsformen mit Gebläse und Kühlelement auch kombiniert werden können.

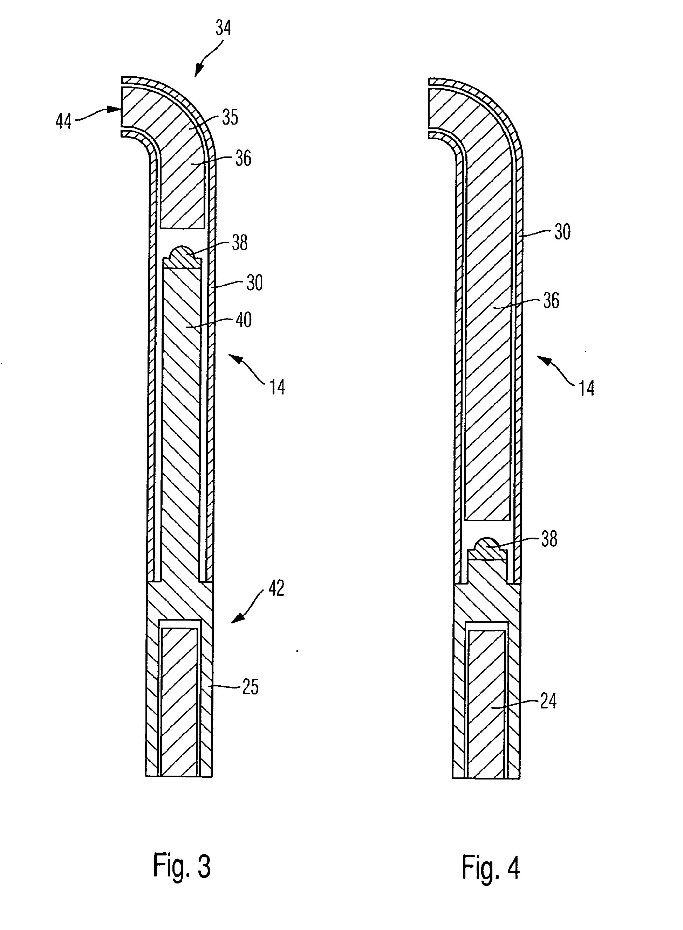

Aus Fig. 3 ist ein Lichthärtgerät 14 im Schnitt ersichtlich. Das Lichthärtgerät 14 weist das Kunststoffgehäuse 30 auf, das sich über einen großen Teil des stiftförmigen Lichthärtgeräts 14 erstreckt. Das Lichthärtgerät 14 ist in einem vorderen Bereich 35 bei einer Abkröpfung 34 seitlich abgebogen. Ein Lichtleiter 36 ist vor einer Lichtquelle 38 vorgesehen, die durch ein LED-Chip gebildet ist. Der LED-Chip ist auf einem Wärmeleiter 40 angebracht, der sich bis recht weit nach vorne, also in dem dargestellten Ausführungsbeispiel bis zum vorderen Viertel des Lichthärtgeräts 14 erstreckt. Der Wärmeleiter 40 und die Lichtquelle 38 sind von dem Kunststoffgehäuse 30 seitlich beabstandet, beispielsweise um 0,5 bis 2 Millimeter, so dass insofern eine Wärmedämmung zusätzlich gegeben ist.

Der Wärmeleiter 40 ist in dem dargestellten Ausführungsbeispiel in seinem rückwärtigen Bereich 42 hülsenförmig ausgebildet und nimmt den Wärmeaufnahmekörper 24 auf. Der Wärmeaufnahmekörper 24 ist aus einem Metall mit besonders hoher Wärmekapazität ausgebildet, während der Wärmeleiter 40 bevorzugt aus Aluminium oder einem anderen Leichtmetall besteht.

Alternativ zu dem Wärmetauschkörper 24, der als eine Art Kern den rückwärten Bereich des Lichthärtgeräts ausfüllt, kann der rückwärtige Bereich auch massiv ausgebildet sein, also der Wärmetauschkörper 24 den rückwärten Bereich selbst bilden. Bevorzugt ist bei dieser Ausführungsform der Wärmetauschkörper 24 aus dem gleichen Material wie der Wärmeleiter 40.

Der Lichtleiter 36 endet an einer Lichtaustrittsfläche 44, die sich seitlich, also im Winkel von 90° zur Lichtaustrittsrichtung der Lichtquelle 38 erstreckt. Um eine möglichst hohe Lichtausbeute zu gewährleisten, ist das Gehäuse 30 innen reflektierend beschichtet. Die von der Lichtquelle 38 abgegebene Lichtstrahlung wird somit auch seitlich reflektiert und - ggf. unter Zuhilfenahme von optischen Mitteln wie Reflektoren oder Linsen - dem Lichtleiter 36 zugeleitet, so dass ein guter Lichtwirkungsgrad gewährleistet ist.

Aus Fig. 4 ist ersichtlich, in welcher Weise die Lichtquelle 38 alternativ angeordnet sein kann. Dort ist der Wärmeleiter 40 wesentlich verkürzt und erstreckt sich über einen sehr kurzen Bereich wie beispielsweise über eine Länge, die dem Durchmesser des Lichthärtgeräts 14 entspricht. Die Lichtquelle 38 ist so dem Wärmeaufnahmekörper 24 eng benachbart.

Der Lichtaustritt erfolgt auch hier durch einen Lichtleiter 36 hindurch, der wesentlich verlängert ist, und sich über beispielsweise 2/3 des stabförmigen Lichthärtgeräts erstreckt.

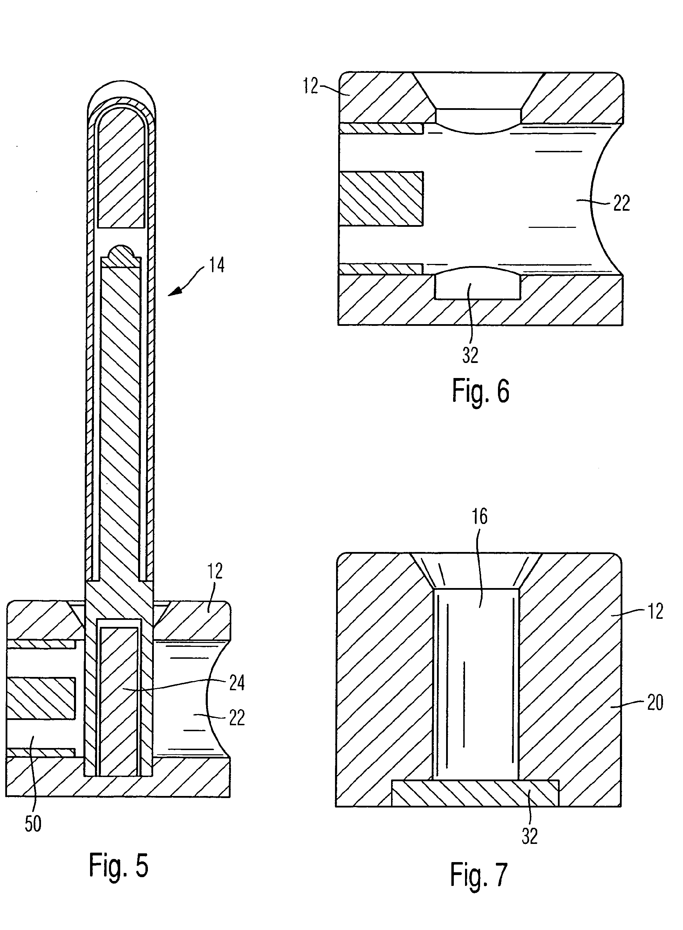

Aus Fig. 5 ist ersichtlich, in welcher Weise das Lichthärtgerät 14 in der Basisstation 12 eingesteckt gekühlt sein kann. Hier ist in Fig. 1 entsprechender Weise ein Kühlluftstrom in dem Strömungskanal 22 vorgesehen, wobei schematisch ein Gebläse 50 in Fig. 5 dargestellt ist.

Fig. 6 zeigt eine vergrößerte Darstellung des Strömungskanals 22 aus Fig. 5, jedoch ohne eingesetztes Lichthärtgerät 14. Es ist ersichtlich, dass der Wärmeaufnahmekörper 24 bei dieser Lösung intensiv von dem Luftstrom des Strömungskanals 22 beaufschlagt wird, während das äußerst rückwärtige Ende des Wärmeaufnahmekörpers 24 in einer kurzen Sacklochbohrung 52 der Basisstation 12 steckt. Dort findet ebenfalls ein intensiver Wärmübergang statt, der die Kühlung unterstützt.

Aus Fig. 7 ist ersichtlich, wie die Basisstation 12 als Alternative ausgestaltet sein kann. Hier ist ersichtlich, dass der Wärmespeicher 20 als massiver Kupferblock wesentlich vergrößert ist. Über das dortige Peltierelement 32 erfolgt eine Kühlung des Lichthärtgeräts 14, wenn es eingesteckt ist.

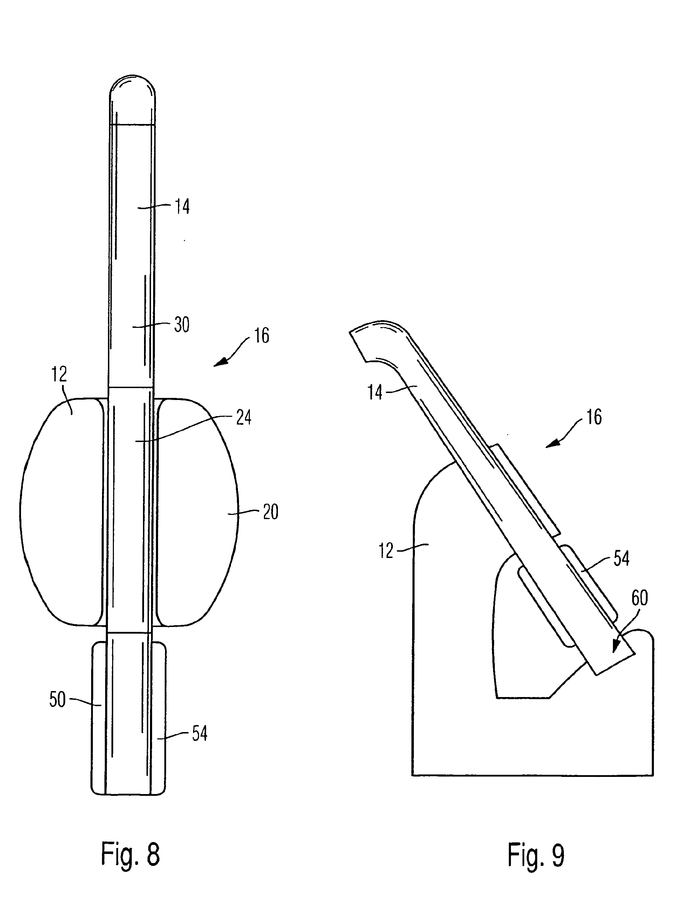

Fig. 8 zeigt eine modifizierte Ausgestaltung einer Kombination 10 aus einem Lichthärtgerät 14 und einer Basisstation 12. Bei dieser Ausführungform gelangt ebenfalls ein im Wesentlichen stabförmiges Lichthärtgerät 14 zum Einsatz, wobei sich der Wärmeaufnahmekörper 24 etwa im mittigen Bereich des Lichthärtgeräts 14 erstreckt. Der rückwärtige Bereich ist von einem Handgriff 54 aufgenommen, der über eine Kunststoffhülse 56 realisiert sein kann. Bei dieser Lösung ist es vorgesehen, das Lichthärtgerät mit seinem Wärmeaufnahmekörper 24 von der Seite in die Basisstation 12, die einen entsprechend geformten Schlitz aufweist, einzuführen, wobei die Basisstation hier bei einem kreisrunden Querschnitt des Lichthärtgeräts im Bereich der Ausnehmung 16, die hier schlitzförmig ausgebildet ist, den Wärmeaufnahmekörper 24 halbkreisförmig umgibt und dort in gutem Wärmeleitkontakt anliegt.

Es versteht sich, das bei dieser Ausführungform beispielsweise auch eine rechteckige Ausbildung mindestens des Wärmeaufnahmekörpers 24 realisierbar ist, die es dann ermöglicht, dass der Wärmeaufnahmekörper 24 an drei Seiten seines Umfangs, als beispielsweise über 75% seines Umfangs, an der Basisstation 12 anliegt.

Aus Fig. 9 ist eine weitere Ausführungsform des erfindungsgemäßen Lichthärtgeräts ersichtlich. Bei dieser Ausführungsform ist die Basisstation 12 so ausgebildet, dass sie einen leicht schräg geneigten Aufnahmebereich 16 bildet. Über eine Steckaufnahme 60 lässt sich der hinterste Bereich des Lichthärtgeräts 16 abstützen. Diese Ausführungsform ist ebenfalls für ein stabförmiges Lichthärtgerät 14 gestimmt. Alternativ lässt sich diese Ausführungsform mit einem pistolenförmigen Lichthärtgerät kombinieren, wobei dann anstelle der Steckaufnahme 60 eine Aufnahme für den Handgriff vorgesehen ist, wobei der Wärmeaufnahmekörper 24 zugleich in die Ausnehmung 16 einführbar ist.

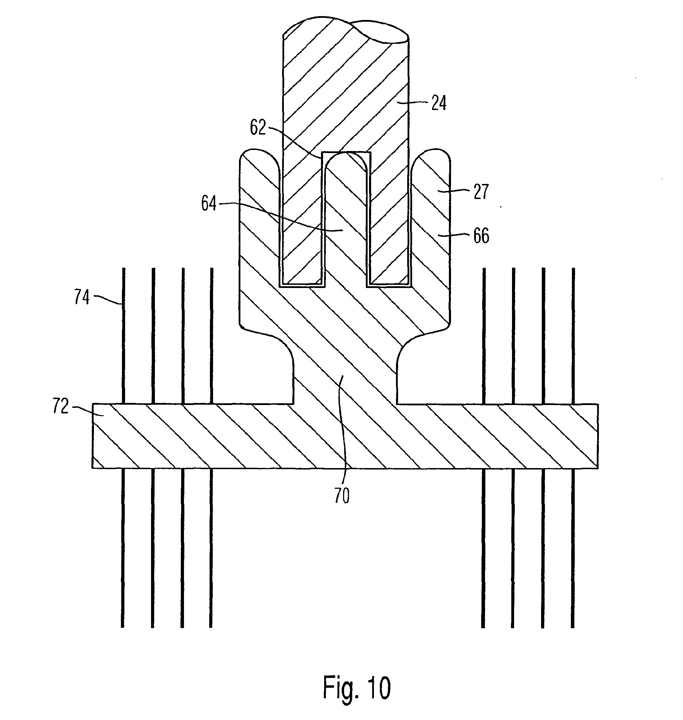

Aus Fig. 10 ist ersichtlich, in welcher Weise ein intensiver Kontakt zwischen dem Wärmeaufnahmekörper 24 und der Wärmeableitvorrichtung 27 realisierbar ist. Bei dieser Ausführungsform ist im Grunde kein nennenswerter Wärmespeicher 20 vorgesehen, wobei die Wärmekapazität der metallischen Elemente im Grunde stets als Wärmespeicher dient.

Das rückwärtige Ende des Lichthärtgeräts weist bei dieser Ausführungsform eine Bohrung 62 auf. In die Bohrung greift passend ein Zapfen 64 ein, der zusammen mit einer Hülse 66 das Wärmeaufnahmeelement 27 bildet. Über eine Heat Pipe 70 ist bei dieser Ausführungsform die Wärmeableitvorrichtung 27 mit einem Kühlkörper 72 verbunden, der zahlreiche Kühlrippen 74 aufweist, die sich bevorzugt im wesentlichen vertikal erstrecken, wie es an sich bekannt ist.

## Patentansprüche

1. Lichthärtgerät-Basisstations-Kombination, mit einem Wärmeaufnahmekörper, der insbesondere metallisch ist, und der in wärmeleitverbindung mit einer Wärmequelle, insbesondere einer Lichtquelle, steht, und insbesondere mit einem Handgriff, **dadurch gekennzeichnet, dass** die Basisstation (12) für das Lichthärtgerät (10) eine Wärmeableitvorrichtung (27) aufweist, die bei in oder an der Basisstation (12) aufgenommenem Lichthärtgerät (14) in Anlage mit dem Wärmeaufnahmekörper (24) ist.

2. Lichthärtgerät-Basisstations-Kombination nach Anspruch 1, **dadurch gekennzeichnet, dass** das insbesondere stabförmig ausgebildete Lichthärtgerät (14) in einer Ausnehmung (16) der Basisstation (12) aufnehmbar ist.

3. Lichthärtgerät-Basisstations-Kombination nach einem der vorhergehenden Ansprüche, **dadurch gekennzeichnet, dass** der Wärmeaufnahmekörper (24) zwischen dem lichtaustrittsseitigen, vorderen Endbereich (35) und dem Handgriff (54) und/oder im Bereich des Handgriffs (54) angeordnet ist.

4. Lichthärtgerät-Basisstations-Kombination nach einem der vorhergehenden Ansprüche, **dadurch gekennzeichnet, dass** der Wärmeaufnahmekörper (24) direkt, über das Gehäuse oder über ein Wärmetauschelement (25) an der Basisstation (12) anliegt.

5. Lichthärtgerät-Basisstations-Kombination nach einem der vorhergehenden Ansprüche, **dadurch gekennzeichnet, dass** die Wärmeableitvorrichtung (27) einen Wärmespeicher (20) und/oder eine Kühlung, insbesondere mit einem Gebläse oder einem Kühlkörper, aufweist.

6. Lichthärtgerät-Basisstations-Kombination nach einem der vorhergehenden Ansprüche, **dadurch gekennzeichnet, dass** der Wärmespeicher (20) mit dem Wärmeaufnahmekörper (24) in Wärmeleitverbindung bringbar ist.

7. Lichthärtgerät-Basisstations-Kombination nach einem der vorhergehenden Ansprüche, **dadurch gekennzeichnet, dass** der Wärmeaufnahmekörper und ein mit dem Wärmespeicher (20) in Verbindung stehender Aufnahmebereich (Ausnehmung 16) der Basisstation zueinander passende Querschnitte aufweisen und dass insbesondere die metallische Außenfläche des Wärmetauschelements (25) im Querschnitt kreissymmetrisch und drehbar in der Ausnehmung ausgebildet ist.

8. Lichthärtgerät-Basisstations-Kombination nach einem der vorhergehenden Ansprüche, **dadurch gekennzeichnet, dass** das in der Basisstation Aufnahme findende Lichthärtgerät (14) wenigstens teilweise direkt mit der Basisstation (12) in Kontakt steht.

9. Lichthärtgerät-Basisstations-Kombination nach einem der vorhergehenden Ansprüche, **dadurch gekennzeichnet, dass** der rückwärtige Endbereich des Lichthärtgeräts (14) und/oder die Öffnung des Aufnahmebereichs (Ausnehmung 16) der Basisstation (12) eine Einführschräge (26) aufweist.

10. Lichthärtgerät-Basisstations-Kombination nach einem der vorhergehenden Ansprüche, **dadurch gekennzeichnet, dass** die Wärmekapazität des Wärmespeichers (20) mindestens doppelt so groß, insbesondere etwa 5 mal so groß wie die Wärmekapazität des Wärmeaufnahmekörpers (24) ist.

11. Lichthärtgerät-Basisstations-Kombination nach einem der vorhergehenden Ansprüche, **dadurch gekennzeichnet, dass** die Basisstation (12) wenigstens einen Teil der Wärmeableitvorrichtung (27), ein Gebläse und/oder Kühlrippen aufweist und dass insbesondere ein Kühlluftstrom durch die Basisstation (12) quer zur Längserstreckung des Lichthärtgeräts, das in der Basisstation (12) aufgenommen wird, verläuft.

12. Lichthärtgerät-Basisstations-Kombination nach einem der vorhergehenden Ansprüche, **dadurch gekennzeichnet, dass** die Basisstation (12) ein Gebläse und/oder Kühlrippen aufweist, und dass ein Kühlluftstrom durch die Basisstation (12) quer zur Erstreckung des Lichthärtgeräts (14), das in der Basisstation (12) aufgenommen ist, verläuft.

13. Lichthärtgerät-Basisstations-Kombination nach einem der vorhergehenden Ansprüche, **dadurch gekennzeichnet, dass** die Basisstation (12) ein Kühlelement, beispielsweise ein Peltier-Element (32) aufweist, das bei in die Basisstation (12) eingestecktem Zustand in Wärmeleitverbindung mit dem Lichthärtgerät (14) steht.

14. Lichthärtgerät-Basisstations-Kombination nach einem der vorhergehenden Ansprüche, **dadurch gekennzeichnet, dass** das Lichthärtgerät (14) eine Schiebehülse trägt, die insbesondere federbelastet den Wärmeaufnahmekörper am rückwärtigen Endbereich des Lichthärtgeräts (14) abdeckt, wenn das Lichthärtgerät (14) nicht in die Basisstation (12) eingesteckt ist.

15. Lichthärtgerät-Basisstations-Kombination nach einem der vorhergehenden Ansprüche, **dadurch gekennzeichnet, dass** das Lichthärtgerät (14) in der Basisstation (12) mit Magnetkraft gehalten ist.

16. Lichthärtgerät-Basisstations-Kombination nach einem der vorhergehenden Ansprüche, **dadurch gekennzeichnet, dass** sich in dem Aufnahmebereich (Ausnehmung 16) der Basisstation (12) ein hoch wärmeleitendes Gel befindet.

17. Lichthärtgerät-Basisstations-Kombination nach einem der vorhergehenden Ansprüche, **dadurch gekennzeichnet, dass** wenigstens ein Teil der Wärmeableitvorrichtung in der Basisstation (12) von einer Heat Pipe gebildet ist.

18. Lichthärtgerät, mit einem insbesondere metallischen Wärmeaufnahmekörper, der in Wärmeleitverbindung mit einer Wärmequelle, insbesondere einer Lichtquelle, steht, **dadurch gekennzeichnet, dass** der Wärmeaufnahmekörper (24) mit einer Wärmeableitvorrichtung (27) in thermischer Verbindung steht, über welche an einem Wärmetauschelement (25) des Lichthärtgeräts (14) vorliegende Wärme, das von einem vorderen Endbereich (35) des Lichthärtgeräts deutlich beabstandet ist, abgebbar ist.

19. Lichthärtgerät nach Anspruch 18, **dadurch gekennzeichnet, dass** der Wärmeaufnahmekörper (24) bei eingeschalteter Lichtquelle (38) Wärme aufnimmt und auch nach Ausschalten der Lichtquelle (38) diese Wärme über das Wärmetauschelement (25) abgibt.
